# EUROPEAN PATENT APPLICATION

(11) **EP 2 996 365 A1**
(43) Date of publication of application: **16.03.2016**
(21) Application number: 14184281.5
(22) Date of filing: 10.09.2014
(51) Int. Cl.: H04W 8/20

(54) **Method for interaction of a wireless communication device with an identification unit**

(71) Applicant: Gemalto M2M GmbH, 81541 München (DE)
(72) Inventor: Breuer, Volker, 16727 Bötzow (DE); Klapper, Christian, 16552 Schildow (DE); Ostheeren, André, 13881 Gemenos (FR)
(74) Representative: Grevin, Emmanuel

(57) **Abstract**

The present invention relates to a method for interaction of a wireless communication device with an identification unit,
the wireless communication device being connected with said identification unit,
the wireless communication device further operating within a cellular network by means of said identification unit,
said identification unit being configured to carry information representing a subscription for operating a wireless communication device in the cellular network,
the wireless communication device and the identification unit being adapted to provide each a set of capabilities of operation within the cellular network, wherein the method comprises the steps of:
- determining a first set of information representing the capabilities of the wireless communication device,
- determining a second set of information representing the capabilities of the identification unit,
- analysing the first and the second set of information for differences,
- carrying out measures for handling of differences, in case differences have been detected at the analysing step

## Description

### FIELD OF THE INVENTION

The present invention relates to a method for interaction of a wireless communication device with an identification unit.

The invention also pertains to a wireless communication device and an identification unit using said method.

### BACKGROUND OF THE INVENTION

Generally, in the field of wireless cellular communication a wireless communication device is operating in a cellular network, e.g. supporting 2G, 3G or 4G technology standards, by means of an identification unit, in particular a SIM or UICC, in particular an USIM card. The identification unit carries a plurality of authentication and authorization information representing the subscription of the owner of the wireless communication device. Such authentication and authorization information are according to recent developments not only the binary information if the wireless communication device is at all enabled to operate within a specific cellular network. Instead the authentication and authorization information further define the way the wireless communication device may operate in the cellular network. Further such identification unit can as such support functionalities offered by the cellular network.

This achievement causes on the other hand problems once it is possible to connect the wireless communication device to a plurality of identification units, and at least two of the plurality of identification units provide each different capabilities of operation in the cellular network. If the wireless communication device is technically able to access a certain capability of operation in the cellular network, which the currently selected identification unit does not support, it can result in an undesired behavior. Such undesired behavior comprises in particular that a request for a certain service of the cellular network is rejected by the cellular network.

An example for such a situation is a car comprising an entertainment unit equipped with a wireless module, a so-called M2M module. In order to avoid the acquisition of a second SIM, the entertainment unit is able to connect to a handheld device via wireless near field protocols like Bluetooth. Hence the entertainment unit accesses by way of a remote subscription unit access protocol, in particular the Remote SIM access protocol (RSA), the credentials from the SIM present in the mobile handset for operating in the cellular network. If now a PC or tablet computer equipped with a data-only SIM is also available in the car, it can happen that accidentally the entertainment unit accesses the data-only SIM for setting up connectivity. A voice-call via the entertainment unit will therefore fail afterwards, with a message like: network not available, which leaves the user in a lack of clarity on the reason of the behavior.

This situation is in particular disadvantageous as for such calls a remarkable amount of interaction with the cellular network is necessary which is completely in vain. This is in particular true as due to the poor user information from the user interface of the car's entertainment unit the user will most likely try it again, in particular in case of an emergency call. If this happens in many cases finally the cellular networks can be overloaded by superfluous signaling and the user is left helpless when he wants to launch urgent voice-calls, like an emergency call. Furthermore there are already today different generations of identification units and wireless communication devices which can be randomly combined but supporting different technologies. A 2G identification unit (SIM) would cause an LTE supporting wireless communication device to deactivate that technology and allow only registration to 2G.

### SUMMARY OF THE INVENTION

It is therefore a goal of the invention to overcome the mentioned disadvantages and propose a solution where an incompatibility of the wireless communication device and the identification unit is detected in time. Further alternative and advantageous solutions would, accordingly, be desirable in the art.

For this it is according to a first aspect of the invention suggested a method for interaction of a wireless communication device with an identification unit according to claim 1. It is further suggested according to a second aspect of the invention a wireless communication device according to claim 9. It is further suggested according to a third aspect of the invention an identification unit according to claim 12.

The present invention relates according to a first aspect of the invention to a method for interaction of a wireless communication device with an identification unit, the wireless communication device being connected with said identification unit, the wireless communication device further operating within a cellular network by means of said identification unit, said identification unit being configured to carry information representing a subscription for operating a wireless communication device in the cellular network, the wireless communication device and the identification unit being adapted to provide each a set of capabilities of operation within the cellular network, wherein the method comprises the steps of:
- determining a first set of information representing the capabilities of the wireless communication device,
- determining a second set of information representing the capabilities of the identification unit,
- analysing the first and the second set of information for differences,
- carrying out measures for handling of differences, in case differences have been detected at the analysing step.

The inventive method is based on the connection of a wireless communication device connected with an identification unit, in particular a SIM or UICC. According to that the method steps of determining the information representing capabilities of the wireless communication device and of the identification unit are in particular carried out by the wireless communication device. This is advantageous as the wireless communication device has means to figure out its own capabilities, or at least provide means configured to do so. It is additionally advantageous to carry out this step only once and make available the results of the determination for each situation where a connection with an identification unit is supposed to be set up.

The wireless communication device has further means for requesting from an identification unit information relating to its capabilities. This is in particular done by APDU requests.

The set of capabilities in question comprise in a preferred embodiment to at least one out of:
- the capability to support a group of radio access technologies, and/or
- the capability to support a set of services within a certain radio access technology.

The set of services comprises in particular the use of voice or data usage, in particular supporting IP based communication.

The determination steps lead to a set of capabilities both for the wireless communication device and the identification unit. These two sets are then compared in the analysing step.

Advantageously the first determination step returns a number of capabilities of the wireless communication device. In a second determination step this leads to a request for only those capabilities which were received in the first determination step. This increases the efficiency of the method as only relevant capabilities are requested.

It is in this case further advantageous to carry out the second determination step only to the extent that it is found that the identification unit supports the requested capability. In case a capability is found that is not supported the second determination step is preferably stopped. In this case the analysing step only consists of the verification if the last step of the second determination step resulted that the identification unit supports the requested capability or not.

If it is figured out that a determined capability of the wireless communication device is not supported by the identification unit, measures for handling this situation are carried out.

In a first preferred embodiment the measures for handling the differences comprise an event message on a control interface of the wireless communication device.

Such a control interface is in particular a graphical user interface e.g. as part of a car entertainment system. When the difference in capabilities is detected, the user receives a notice preferably telling what the difference is about. With this information the user advantageously gets informed about the shortcomings of the current combination of wireless communication device and identification unit. This is in particular advantageous as in this case the user is prevented from making futile requests - in particular a voice call attempt with a data only SIM - and as such from overloading the cellular network with signalling request which are completely in vain. Therefore the proposed measure of handling the difference in capabilities is useful as part of a cellular network aggression prevention.

In a further preferred embodiment it is proposed that the measures for handling differences comprise the steps of:
- determining the availability of at least one additional identification unit configured to be connected with the wireless communication device,
- in case at least one additional identification unit is determined:
- disconnecting the connection between the wireless communication device and the first identification unit,
- connecting the wireless communication device with the determined additional identification unit,
- repeating said determination and analysing steps.

This embodiment is advantageous for handling the scenario of two or more available identification units. If accidentally the wireless communication device sets up the connection with a first of the two or more identification units, which does not provide all the capabilities of the wireless communication device, this measure allows correcting this first connection, by accessing and connecting to an additional identification unit. It is in this scenario advantageous to execute the inventive determination steps and the analysis step right after setting up the connection between the wireless communication device and the identification unit. For the scenario of two or more available identification units, this leads to an automatic selection of the appropriate identification unit by means of a round robin check until the capabilities of the wireless communication device and the respective identification match. Alternatively for a match in capabilities a process is definable by user or in a preconfigured manner, to consider a minimum of combinations as possible to be successful.

This embodiment is in particular advantageous in combination with another preferred embodiment wherein the connection between the identification unit and the wireless communication device is based on a remote subscription unit access protocol (RSA).

In this case it is not physically connected identification units that are selected but those supporting the RSA protocol. Here it is in particular likely that two or more devices acting as a SAP server, in particular via a wireless near field communication protocol like Bluetooth, are available in proximity of the wireless communication device. This is in particular the case when a user enters the car with two of such devices with both switched on Bluetooth connectivity. It is then a question of random which device gets first connected to the wireless communication device. The proposed embodiment then solves this situation seamlessly without any user interaction. So the user can rely upon the fact that whenever he holds an appropriate identification unit accessible for the wireless communication device, it will automatically be found and connected to the wireless communication device.

Further the proposed embodiment is advantageous in the scenario of the combination of a physically connected identification unit and an identification unit connected via RSA. In the mentioned scenario of a car such a physically connected identification unit will probably be one with only limited functionality, in particular an identification unit which only supports emergency calls. If a mobile device with an identification unit with full capabilities, supporting RSA, is close to the wireless communication device, it is advantageous to connect to this identification unit of the mobile device for the case the user wants to execute other communication tasks than an emergency call.

For this scenario it is in a particular advantageous embodiment proposed a method wherein in case of detected differences determining if the identification unit provides a priority related capability, and in case said priority related capability is determined, suppressing measures for handling of differences.

This embodiment is envisaged for the sketched scenario of a priority related capability like emergency call. Emergency calls have in cellular networks a higher priority than other services. On the other hand it is likely the case that the identification unit supporting emergency call does not support other services. In case a wireless communication device, in particular an on-board-unit of a car, is not only configured for executing emergency call, should it be connected to a appropriate identification unit, the mismatch between the capabilities of the wireless communication device and of the priority related identification unit would appear. This situation would lead to measures, in particular to a notice on the control unit of the wireless communication device. As this described mismatch situation is created on purpose, such measure would be annoying and is according to this embodiment suppressed.

Alternatively in this situation it is preferable to check if another identification unit with full capabilities is in reach in particular through RSA. Hence, it is advantageous to connect the wireless communication device with the additional identification unit via RSA, be it upon availability of the connection, be it upon manual interaction or be it after a time trigger expired.

In another preferred embodiment it is proposed that the measures for handling differences comprise the steps of:
- sending a request to a remote provisioning server by means of the subscription of the first identification unit, said request comprising information related to the analysed differences,
- receiving in response subscription modification records from the remote provisioning server,
- processing received subscription modification records within identification unit, wherein the subscription modification records being configured to modify the subscription stored within identification unit.

According to this embodiment, the identification unit which is identified as not fully supporting the capabilities of the wireless communication device is upgraded by means of a remote provisioning request. Remote provisioning is done by requesting from a remote server at the operator of the cellular network a specific subscription or an update on the existing subscription. Preferably the user has to confirm this request, in particular if it is tied to higher communication tariffs, be it via the user interface of the wireless communication device, or alternatively by an approval in advance. In response to the request the identification unit receives from the remote server subscription modification records which are processed in the identification unit. This leads to a modification of memory segments inside of the identification unit.

In a further preferred embodiment it is proposed that the received subscription modification records relate to a subscription modification which is valid for a limited time.

According to this embodiment it is envisaged that the updated subscription related to the identification unit is only temporary. This is in particular preferable during the usage of the identification unit in relationship with this wireless communication device with this special capability which was lacking before, in particular within the mobile device the identification unit is currently operated.

According to a second aspect of the invention it is proposed wireless communication device configured to be connected to an identification unit, and to operate within a cellular network by means of said identification unit, the identification unit being configured to carry information representing a subscription for operating a wireless communication device in the cellular network, the wireless communication device further comprising a comparison unit and a control unit, the comparison unit is configured to:
- determine a first set of information representing the capabilities of the wireless communication device,
- determine a second set of information representing the capabilities of the identification unit,
- analysing the first and the second set of information for differences, the control unit is configured to:
- carry out measures for handling of differences, in case differences have been detected by the comparison unit.

According to a third aspect of the invention it is proposed an identification unit connected to a wireless communication device configured to carry information representing subscription for operating the wireless communication device in a cellular network, and adapted to provide a set of capabilities of operation within the cellular network,
configured to process a subscription modification record received from the wireless communication device.

The second and third aspects of the invention share the advantages of the first aspect.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
FIG. 1 represents an arrangement of devices according to the prior art;
FIG. 2 represents a similar arrangement of devices according to an embodiment of present invention;
FIG.3 represents a sequence diagram of calls according to an embodiment of present invention;
FIG.4 shows a flow chart showing a call flow according to an advantageous embodiment of present invention.

### DETAILED DESCRIPTION OF EMBODIMENTS OF THE INVENTION

In the drawings below the same elements have been designated with the same reference numerals in the different drawings. For clarity, only those elements and steps which are useful to the understanding of the present invention have been shown in the drawings and will be described.

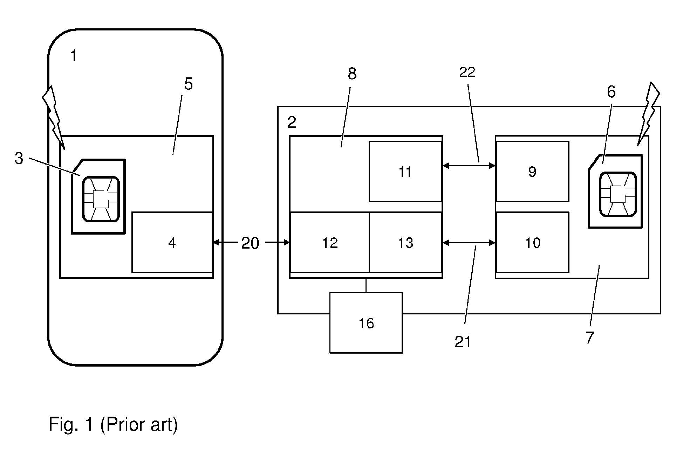

FIG. 1 schematically shows an arrangement of devices according to the prior art depicting one scenario applicable to present invention. It is shown a mobile device 1 capable of operating within a cellular network. The mobile device 1 is equipped with a control unit 5 with access to an identification unit 3. The identification unit 3 is in particular a SIM card, a UICC, a USIM or other variants, which holds the authentication credentials of the cellular network subscriber. When the mobile device 1 registers to the cellular network, the authentication credentials from the identification unit 3 is provided within the registration process.

The identification unit 3 further holds memory segments, where a couple of additional information elements are stored. Those information elements are in particular configured to comprise the type of the identification unit 3 and potentially further capabilities. The type of identification units comprises in particular a voice capable SIM, a data only SIM, an emergency call only SIM, a Twin-SIM, a SIM capable of supporting certain radio access networks (RAN) of the cellular network etc. Preferably another memory segment is configured to hold the information which of the above variants of identification units is present.

The control unit 5 is configured to control all components of the mobile device 1 and to carry out the wireless transmission and reception tasks with the cellular network. Optionally the latter operations are conducted by one separate component connected to and controlled by the control unit 5.

One of the components of the mobile device 1 is a wireless near-field communication interface 4. This is in particular a Bluetooth interface which allows connecting the mobile device 1 to another device comprising a corresponding Bluetooth interface for exchanging data.

The other device is in the shown arrangement a wireless communication device in the form of a customer application 2, comprising a control unit 8 and a communication unit 7. The customer application 2 is in a preferred embodiment an On-Board-Unit (OBU) of a car, comprising entertainment and navigation capabilities, plus wireless communication capabilities for accessing remote servers, carrying out phone calls etc. Typically the OBU is connected to the user interface 16 of the entertainment unit on the dashboard, in particular a touchscreen, that allows the driver of the car to place or accept voice calls, or initiate other wireless communication related activities.

The control unit 8 of the customer application 2 comprises in particular three interfaces for exchanging data and commands with other entities. The first interface is the wireless near-field communication interface 12. This is the corresponding interface to the respective component 4 of the mobile device 1. This is in particular a Bluetooth interface which allows setting up a Bluetooth connection 20 with another Bluetooth interface in the proximity. The second interface is an AT command interface 11 which is capable to communicate with another AT command interface 9 of a communication unit 7. The AT command interface 11 sends AT commands 22 that are based on the Hayes AT command set consisting of textual commands for controlling the behavior of a communication unit 7, in particular a modem. Further the AT command set comprises asynchronous events - unsolicited result codes (URCs) - provided from the communication unit 7 to the controlling unit 8. The third interface is the RSA interface 13, where RSA stands for Remote SIM Access. With the RSA interface 13 the customer application 2 allows for the embedded communication unit 7 using an identification unit 3 which is not physically connected to the customer application 2, but which is connected by means of a host device communicating via a wireless near-field communication interface 12 with the customer appliance. The communication takes place via the SIM Access Protocol (SAP), with the host device (the mobile device 1) acting as SAP-server and the customer application 2, resp. the communication unit 7 acting as SAP client. The SAP allows for the SAP client to access via the available bearer - in the shown embodiment via the Bluetooth connection 20 - the SAP server and asking for the data from the SAP server. The communication unit 7 itself is not equipped with a Bluetooth interface, therefore has to route the request to the SAP server via a transparent RSA channel 21 from a RSA interface 10 of the communication unit 7 to the customer application 2 and via the Bluetooth connection 20 to the SAP server. The customer application 2 sets up the Bluetooth connection 20 by searching for another device with active Bluetooth interface in the proximity. Upon detection of such devices nearby identification keys are exchanged and the Bluetooth connection 20 is set up.

The SAP server acts as identification unit reader and assists the SAP client in accessing and controlling the identification unit 3.

The communication unit 7 optionally comprises a local identification unit 6, which is ignored in the event of availability and successful connection of an identification unit 3 via RSA. This is local identification unit 6 in particular an identification unit with only basic capabilities, in particular a pure emergency call SIM card, allowing only access to one predefined number of the PSAP. In this case it is advantageous to use an identification unit 3 of a mobile device 1 brought by the driver into the car for other types of communication, in particular regular voice calls or data connections to remote servers, in particular in the internet.

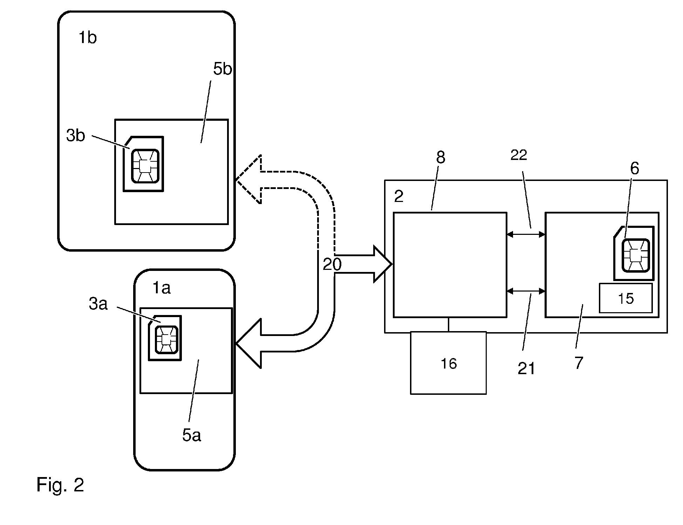

FIG. 2 shows the situation in a similar arrangement, representing an embodiment according to present invention. Basically the arrangement is the same except the fact that now two Bluetooth capable mobile devices 1 a and 1b are present. Some of the components of the displayed units are omitted out of simplicity reasons. Insofar the internal structure of these units complements the internal structure displayed in FIG 1.

The mobile devices 1a and 1b are each equipped with an identification unit 3a, 3b and a control unit 5a, 5b. In this setting, when setting up the Bluetooth connection 20 through the Bluetooth interface of the customer application 2 it is effectively a question of random, with which mobile device 1a, 1b the Bluetooth connection 20 is established.

This can have major impact on the handling of the customer application 2 in the following, as it is very likely that both identification units 3a, 3b comprise different capabilities, and it is not visible for the user, which identification unit 3a, 3b is currently active. The different capabilities cause problems in the handling of the customer application 2, if for one identification unit 3a, 3b a certain capability is missing that the driver expects. This is in particular true in the case of a data-only SIM card, which preferably is used in tablet devices 1 b, but the driver wants to launch a voice call with the OBU.

In order to avoid in such or similar situations a user feedback which is most probably not indicative for the root cause of the failed communication attempt, the communication unit 7 is additionally equipped with a comparison unit 15. This comparison unit 15 is configured to carry out checks in terms of capabilities of the communication unit 7 itself and the identification unit 3, which is currently connected via the SAP protocol 20 and the transparent RSA channel 21. Should the comparison unit 15 figure out a material mismatch in the capabilities of the connected identification unit 3 and the communication unit 7, it sends a notification, e.g. by a unsolicited result code via the AT command channel 22, to the customer applications control unit 8, which then in response preferably takes appropriate measures.

Such measures are in particular, depending on the type of mismatch and other measures, to carry out a search for another mobile device 1 a, 1b incorporating an identification unit 3a, 3b with other capabilities. Another solution is a visual and/or acoustical notification through the user interface 16 of the customer application 2 informing about the mismatch. This prevents the user from re-trying in vain a request for e.g. a voice call, and as such polluting the cellular network with futile request.

In conjunction with such notification for the user it is further foreseen another measure. According to that, if the user agrees, it is carried out a request for a remote provisioning to subscribe to and download the missing capabilities from a remote provisioning server. This results in an in particular temporary update of the identification unit 3 providing a capability which as originally not present.

This is preferable for situations, when the user is connecting his mobile device 1, together with the incorporated identification unit 3, with a customer device 2, which is only temporary in use, in particular a rental car. Here a detected difference in capabilities particularly consist of the supported RANs, in particular if the communication unit 7 of the customer application 2 is configured to support LTE/4G RANs, while the identification unit 3 is only limited to 2G and 3G RAN (probably alike the mobile device 1).

With the remote provisioning request the identification unit 3 receives the missing capability of supporting the use of the 4G RAN, and during further procedure the customer application 2 allows the use of all its technological features.

The comparison unit 15 conducts in order to figure out differences of the capabilities of the communication unit 7 and the connected identification unit 3 a request to the communication unit 7 and to the identification unit 3. The requesting to the communication unit 7 does not necessarily be conducted repeatedly, as the capabilities of the communication unit 7 basically remain constant. It is in particular even possible to provide a configuration file which informs about the capabilities. Alternatively internal requests from the comparison unit 15 in the communication unit 7 reveal the capabilities, in particular in terms of supported frequency bands and technology standards, packet switched / circuit switched communication resp. voice / IP based communication etc.

For determining the capabilities of the identification unit 3 the comparison unit 15 makes use of the SIM Access Protocol. If the capabilities of the communication unit 7 are already known to the comparison unit 15, the determination of the capabilities of the identification unit 3 is preferably optimized by checking if the provided capabilities of the communication unit 7 can be found at the identification unit 3 as well.

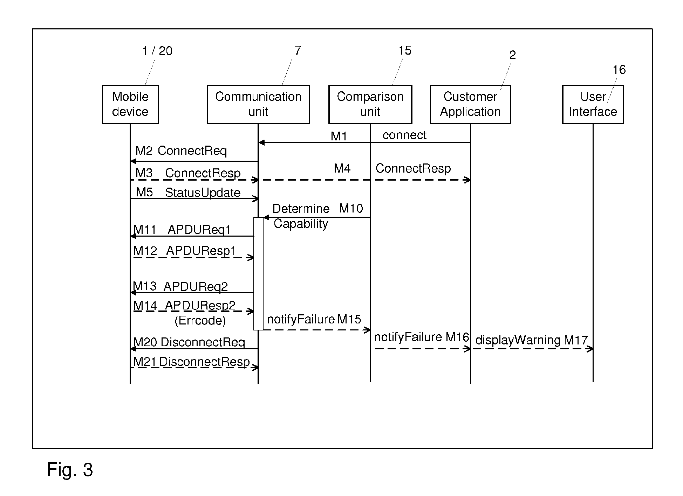

One example of such a determination step, in particular for retrieving the capability to support voice communication is shown in a sequence diagram of FIG. 3. The shown actors are the mobile device 1 acting as SAP server, with a Bluetooth interface 20 supporting the SIM Access Protocol. Further there is the communication unit 7, acting as SAP client, and connected to a customer application 2. Part of the communication unit is additionally the comparison unit 15. Finally there is the user interface (UI) 16 of the OBU of the customer application 2.

The process starts with a connection request M1 from the customer application 2 to the communication unit 7. Typically it is the customer application 2 which instructs the communication unit 7 to set up a connection to a SAP server. The communication unit 7 consequently launches a connection request message M2 for setting up a SAP connection with a SAP server, in particular a mobile device 1. The mobile device 1 is acting as reader for identification units 3, in particular SIM cards. The mobile device 1 responds to the connection request with a connection response message M3. In practice this connection setup might require more than one message-response event, which is for simplicity reasons omitted here, but is incorporated in the proposed embodiment. The result of the connection attempt is returned to the customer application 2 with another message *ConnectResp* M4.

The SAP connection between the communication unit 7 and the mobile device 1 is in the following maintained; regularly the mobile device 1 sends a status update message M5 as part of this connection maintenance task. After the SAP connection is set up, the comparison unit 15 is investigating the capabilities of the connected identification unit 3. As stated above, the comparison unit 15 determined the capabilities of the communication unit 7 before, in particular upon powering up. After setting up the connection it is now checking if for the found capabilities of the communication unit 7 corresponding capabilities at the identification unit 3 interfaced by the mobile device 1 are determined.

For that so called application protocol data unit (APDU) requests are sent to the mobile device 1 on the SAP connection. Such APDU requests are such commands sent to the identification unit 3, in particular such for reading out memory segments of the identification unit 3. Such memory segments in particular hold information elements that indicate the capabilities of the identification unit 3. In the example a first request *APDUreq1* M11 is submitted and the corresponding response *APDUresp1* M12 is received. From that the comparison unit 15 is able to derive that a certain capability, in this example the capability to execute packet based communication, is available. Preferably this is a request for reading out a memory segment like EF_UST resp. EF_SST, which comprises the (U)SIM-Service table according to standard document 3GPP TS31.102. This allows receiving information about service capabilities of the identification unit resp. the (U)SIM. In particular such a request consists of a request for the content of the service table plus additional requests from other memory segments. In particular for an operator's supported PLMNs the access technologies are determined by a chain of requests including requesting memory segment EF_PLMNwACT. In effect this gives a picture of supported access technologies, in particular if e.g. LTE is supported with this identification unit.

With the next request *APDUreq2* M13 it is tried to find out, if the identification unit 3 allows voice communication. In this example this is done by reading out the memory segment EF_LOCI, holding the temporary mobile subscriber identity (TMSI). A TMSI is only available, if the identification unit 3 is able to perform voice communication, otherwise an invalid TMSI with an error code is returned in the response *APDUResp2* M14. If this is the case, the comparison unit 15 gets noticed with a message *notifyFailure* M15 that the capability of the communication unit 7 to carry out voice communication is not supported by the identification unit 3. A call attempt would in effect lead to a call rejection. Hence the comparison unit 15 sends to the customer application 2 another failure message *notifyFailure* M16. Depending on the configuration the customer application 2 chooses in response to the failure notification M16 to provide a notice to the user, and for that sends a message *displayWarning* M17 with instruction to the user interface 16 to show a warning to the user indicating the detected situation.

In response to the message *APDUResp2* M14 including the error code the communication unit 7 is sending a request message *DisconnectReq* M20 for disconnecting the communication unit from the mobile device, and receives as response *DisconnectResp* M21, indicating the result of the disconnection.

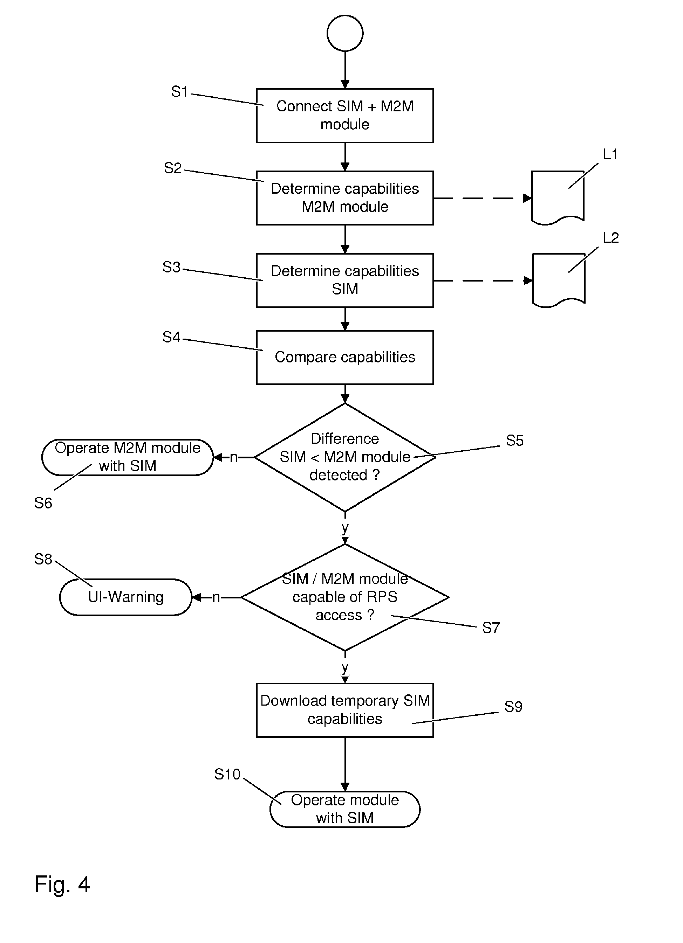

FIG 4 shows a flow chart of the general procedure in a preferred embodiment of present invention. It is based on an embodiment comparable with Fig 1 or 2, that is a customer application 2 with a communication unit 7 in form of an M2M module and a mobile device 1 equipped with an identification unit 3 in form of a SIM card. It starts in step S1 with setting up a connection between the SIM card via RSA with that the M2M module is able to operate within a chosen cellular network.

As a next step S2, preferably directly after the connection is setup and the M2M module is registered in the cellular network, the capabilities of the M2M module are determined. The result is held in a list L1. Such capabilities encompass in particular the range of RANs that this M2M module is able to access, further voice and data capabilities, is the M2M module prepared for emergency calls etc. The capabilities of the M2M module preferably further encompass information about interfaces to the customer application, in particular if a connection at voice related ports is setup, and thus the customer application is able to carry out voice calls.

In the next step S3 the capabilities of the SIM card are determined. This happens preferably through APDU requests for reading out the content of certain memory segments of the SIM card. It is further preferably to only check for those capabilities that are present for the M2M module. The results are collected in a list L2.

In a next step S4 the capabilities of lists L1 and L2 are compared. In the case of only checking in S3 for the SIM card those capabilities that are present in L1, this step in particular means to figure out that at least one capability is not present in the SIM card. It is even preferred in S3 to stop to continue the checks once it is determined that the SIM card does not provide one of the capabilities present in list L1. In the latter case the step S4 only comprises the check if the last checked capability in S3 is present in the SIM card or not.

Depending on the result of this comparison step S4 it is in S5 branched to the next steps. If no difference is detected, the M2M module is able to operate with the SIM card in S6, as usual.

Otherwise there have to be taken measures to handle with the incompatibility of the capabilities of SIM card and the M2M module.

In the shown embodiment the found incompatibility relates to topics, which can be handled with a remote provisioning procedure by accessing a remote provisioning server (RPS) in the cellular network. Therefore in step S7 it has to be checked if the M2M module has access to a remote provisioning server. Additionally it is preferable to check with the user if he is willing to update his SIM card in order to be able to fully use the capabilities of his customer application.

If the access to the RPS is not available, then as only measure there is the chance to inform the user in step S8, in order that he does not make requests in vain, in particular voice calls with a data only SIM card.

Otherwise and when the customer agrees, a remote provisioning session is started in step S9. With that the SIM card downloads the required data to update its capabilities. In this particular embodiment the capabilities are only temporary booked and hence available. That is preferable in a situation where the SIM card is accessed via RSA. In particular when the mobile device, the SIM cards is physically connected to, is not capable to support a certain capability, in particular a RAN like LTE, then for the use of the SIM card with this mobile device the downloaded capability is not useful. This is in particular true when the user uses his device not regularly in the car with the envisaged customer application comprising an LTE capable M2M module. Afterwards the remote provisioning step has concluded, in step S10 the M2M module operates with the updates SIM card in the cellular network and is able to provide all capabilities it has available.

From the foregoing it will be apparent that the presented method solves the envisaged goal to overcome the disadvantages of the solutions known in the art, and it provides a flexible mechanism for reliable interaction between a wireless communication device and an identification unit.

## Claims

1. Method for interaction of a wireless communication device (2) with an identification unit (3a),
the wireless communication device (2) being connected with said identification unit (3a),
the wireless communication device (2) further operating within a cellular network by means of said identification unit (3a),
said identification unit (3a) being configured to carry information representing a subscription for operating a wireless communication device (2) in the cellular network,
the wireless communication device (2) and the identification unit (3a) being adapted to provide each a set of capabilities of operation within the cellular network,
wherein the method comprises the steps of:
- determining a first set of information representing the capabilities of the wireless communication device (2),
- determining a second set of information representing the capabilities of the identification unit (3a),
- analysing the first and the second set of information for differences,
- carrying out measures for handling of differences, in case differences have been detected at the analysing step.

2. Method according to claim 1,
wherein the set of capabilities comprises at least one out of:
- capability to support a group of radio access technologies, and/or
- capability to support a set of services within a certain radio access technology.

3. Method according to at least one of the previous claims
wherein the measures for handling of differences comprise an event message on a control interface (16) of the wireless communication device (2).

4. Method according to at least one of the previous claims,
wherein the measures for handling differences comprise the steps of:
- determining the availability of at least one additional identification unit (3b) configured to be connected with the wireless communication device (2),
- in case at least one additional identification unit (3b) is determined:
- disconnecting the connection between the wireless communication device (2) and the first identification unit (3a),
- connecting the wireless communication device (2) with the determined additional identification unit (3b),
- repeating said determination and analysing steps.

5. Method according to at least one of the previous claims
wherein the connection (20) between the identification unit (3a) and the wireless communication device (2) is based on a remote subscription unit access protocol.

6. Method according to at least one of the previous claims,
wherein the measures for handling differences comprise for the wireless communication device (2) the steps of:
- sending a request to a remote provisioning server by means of the subscription of the first identification unit (3a), said request comprising information related to the analysed differences,
- receiving in response subscription modification records from the remote provisioning server,
- processing received subscription modification records within identification unit (3a), wherein the subscription modification records being configured to modify the subscription stored within identification unit (3a).

7. Method according to claim 6,
wherein the received subscription modification records relate to a subscription modification which is valid for a limited time.

8. Method according to at least one of the previous claims,
wherein in case of detected differences:
- determining if the identification unit (3a) provides a priority related capability, and
in case said priority related capability is determined, suppressing measures for handling of differences.

9. Wireless communication device (2) configured to be connected to an identification unit (3a), and to
operate within a cellular network by means of said identification unit (3a),
the identification unit (3a) being configured to carry information representing a subscription for operating a wireless communication device (2) in the cellular network, the wireless communication device (2) further comprising a comparison unit (15) and a control unit (8),
the comparison unit (15) is configured to:
- determine a first set of information representing the capabilities of the wireless communication device (2),
- determine a second set of information representing the capabilities of the identification unit (3a),
- analysing the first and the second set of information for differences,
the control unit (8) is configured to:
- carry out measures for handling of differences, in case differences have been detected by the comparison unit (15).

10. Wireless communication device (2) according to claim 9,
wherein the control unit (8) is for carrying out said measures configured to
- determine the availability of at least one additional identification unit (3b) configured to be connected with the wireless communication device (2),
- in case at least one additional identification unit (3b) is determined:
- disconnect the connection (20) between the wireless communication device (2) and the first identification unit (3a),
- connect the wireless communication device (2) with the determined additional identification unit (3b),
- instruct the comparison unit (15) to repeat determination and analysis.

11. Wireless communication device (2) according to at least one of the claims 9 and 10,
wherein the control unit (8) is for carrying out said measures configured to:
- send a request to a remote provisioning server by means of the subscription of the first identification unit (3a), said request comprising information related to the analysed differences,
- receive in response subscription modification records from the remote provisioning server,
- provide subscription modification records to identification unit (3a), wherein the subscription modification records being configured to modify the subscription stored within identification unit (3a).

12. Identification unit (3a) connected to a wireless communication device (2) configured to carry information representing subscription for operating the wireless communication device (2) in a cellular network,
and adapted to provide a set of capabilities of operation within the cellular network,
configured to process a subscription modification record received from the wireless communication device (2).

13. Identification unit (3a) according to claim 12,
wherein the received subscription modification records relate to a subscription modification which is valid for a limited time.

14. Identification unit (3a) according to claim 12 or 13,
wherein the connection (20) to the wireless communication device (2) is based on the remote subscription unit access protocol.
